# EUROPEAN PATENT APPLICATION

(11) **EP 4 292 867 A1**
(43) Date of publication of application: **20.12.2023**
(21) Application number: 22179306.0
(22) Date of filing: 15.06.2022
(51) Int. Cl.: B60L 53/18, B60L 53/10, B60L 53/14, B60L 53/302

(54) **CHARGING CABLE AND CHARGING STATION FOR ELECTRIC VEHICLES**

(71) Applicant: Bayerische Motoren Werke Aktiengesellschaft, 80809 München (DE)
(72) Inventor: Iliffe-Moon, Etienne, Menlo Park 94025 (US)

(57) **Abstract**

An electric charging cable (1) comprises a flexible sheathing (4) and inside the sheathing (4) several flexible electric wires (5) running along the sheathing (4) and at least one flexible coolant channel (6A-6D) running along the sheathing (4), the electric wires (5) and the at least one coolant channel (6A-6D) ending in a charging connector (2), wherein a pressure (P_{A}-P_{D}) of a coolant (L) inside the at least one coolant channel (6A-6D) is individually controllable to set a mechanical behavior of the charging cable (1). A charging station (S) for electric vehicles (EV) comprises an electric charging cable (1) and further comprising at least one coolant pressure device (8) connected to at least one coolant channel (6A-6D) of the electric charging cable (1), the coolant pressure device (8) being adapted to set a pressure (P_{A}-P_{D}) of a coolant (L) inside the at least one coolant channel connected to it.

## Description

The invention relates to an electric charging cable, comprising a flexible sheathing and inside the sheathing several flexible electric wires running along the sheathing and at least one flexible coolant channel running along the sheathing, the electric wires and the at least one coolant channel ending in a charging connector. The invention also relates to a charging station for electric vehicles, comprising the electric charging cable and further comprising at least one coolant pressure device connected to at least one coolant channel of the electric charging cable, the coolant pressure device being adapted to set a pressure of a coolant inside the at least one coolant channel connected to it. The invention is particularly useful for DC fast charging stations.

A hurdle to the adoption of electric vehicles, EVs, is the consumer concern of EV range and often long charging times. Direct current, DC, fast charging offers the promise of very fast charging times (e.g., in the range of 5 to 20 mins) and may improve EV adoption by those with range anxiety and concerns about the convenience of charging. The EV charging time is partly dependent on the charging current and therefore on the charging cable that connects the EV to a charging station.

However, high charging currents generate a significant amount of heat in the charging cable, resulting in larger and heavier gauge electrical wires within the charging cable. In this case, cooling the charging cable is advantageous to dissipate the heat and also to enable a reduction in the gauge of electric wires used for carrying the charging current, resulting in thinner, more flexible and lighter charging cables. To cool the charging cable, it is known to use a pressurized coolant (or phase change coolant) which, in turn, requires additional sub-systems within the charging station to pump and cool/condition the liquid coolant. Even with the improvement of liquid cooling, the fast charging stations utilize charging cables with high weight and poor flexibility which can be heavy and difficult to lift, handle, and maneuver between the charging station and vehicle.

US 4,784,042 discloses a method and a system employing strings of tension actuators in opposed relationship for controlling motions or deflections of jointed members: for example, for controlling the motions of arms, legs and elephant trunks or flexible antennae in robots and for controlling the deflections of beams and columns in frames and structures. These opposed tension actuators are inflated with controlled air pressures which are oppositely varied from a predetermined common-mode pressure P₀ (initial fluid pressure level P₀). In other words, as one tension actuator is being inflated with pressure increasing above P₀, the opposed tension actuator is being inflated with pressure decreasing below P₀ for producing motion or deflection of the jointed member in one direction, and conversely for producing motion or deflection in the other direction. The opposed tension actuators have their ends anchored to rigid movable plates or struts containing sockets for the respective joints. By virtue of controlling the opposed actuators with a common mode pressure level Po, they are always exerting a net compressive force on each joint, so advantageously permitting usage of simple, inexpensive, lightweight, non-capturing joints as shown. Moreover, the jointed member automatically returns to a predetermined midrange rest position whenever air pressures are returned to P₀. A nearly uniform stiffness (or mechanical output impedance) is provided at all positions by controlling the opposed pressures to be P₀+ΔP and P₀-ΔP, where ΔP is a corresponding increment above and below the initial (common-mode) level P₀.

It is the **object** of the present invention to at least partially overcome the problems associated with the prior art. It is a particular object of the present invention to improve handling of a cooled charging cable and to improve the charging experience related to the charging cable.

The object is achieved according to the features of the independent claims. Advantageous embodiments can be found, e.g., in the dependent claims and/or in the description.

In particular, the object is achieved by an electric charging cable comprising a flexible sheathing and inside the sheathing several flexible electric wires running along the sheathing and at least one flexible coolant channel running along the sheathing, the electric wires and the at least one coolant channel ending in a charging connector, wherein a pressure of a coolant inside the at least one coolant channel is individually controllable to set a mechanical behavior of the charging cable.

This electric charging cable gives the advantage that a mechanical behavior of the charging cable, e.g., its form, shape, motion, dynamics, etc. can be supported by control of the pressure of the coolant in the coolant channels of the charging cable. This improves ease of use of the charging cable by a user and improves the charging experience related to the charging cable. The advantage or using liquid cooling comprises a potential reduction in wire gauge, resulting in thinner, lighter, and more flexible wires and charging cable, respectively. The electrical wires can be reconfigured to further enhance flexibility and ease of use, in addition to facilitating the packaging of the liquid channels within the sheathing.

The electric charging cable is used to connect a charging station, EVSE, to an EV for charging a battery, of the EV. The charging station may be a DC charging station, in particular DC fast charger, or an AC charging station. The electric charging cable is mechanically flexible to allow easy connection to the EV. The electric vehicle may, e.g., be a plug-in hybrid electric vehicle, PHEV, or a fully electrically powered battery electric vehicle, BEV.

The section of the charging cable comprising the sheathing, the electric wires running along the sheathing and the at least one coolant channel running along the length of the sheathing may also be called a conduit section. Thus, the charging cable may comprise the conduit section which at one end is connected to the charging connector and which at the other end may be connected to the charging station. In an embodiment, the conductive electrical wires are positioned on (or as close to) to a neutral axis/plane of the cable.

The charging connector is used to connect the charging cable to a respective charging plug of the EV. The connector may generally conform to any charging design or plug specification, e.g., type 1 like SAE J1772/2009 etc., type 2 like VDE-AR-E 2623-2-2, SAE J3068, and GB/T 20234.2 etc., type 3, or type 4 (DC fast charge couplers) like configuration AA (CHAdeMO), configuration BB (GB/T 20234.3), configurations CC/DD: (reserved), configuration EE like CCS Combo 1, configuration FF like CCS Combo 2, etc.

The at least one coolant channel may comprise one or more coolant channels being fluidically separated from each other. Thus, when multiple coolant channels are present in the charging cable, they may be pressurized individually which advantageously allows for a high degree of variation of the mechanical behavior of the charging cable, e.g., shape or movement, e.g., similar to "soft robotics". Generally, the charging cable may be designed in analogy to a robot arm powered by pressure lines.

In an embodiment, the at least one coolant channel is flexible along their longitudinal extension / direction which allows longitudinal expansion / contraction of the length of the at least one coolant channel to be controlled by the coolant pressure. In an embodiment, the at least one coolant channel is not or not significantly flexible transversely / laterally about the cross section, i.e., perpendicular to the longitudinal direction. This advantageously prevents the charging cable from "bulging". Thus, in an embodiment, the expansion / contraction may be practically limited to or constrained in the longitudinal direction. In an embodiment, the at least one coolant channel may comprise an elastomeric tube (e.g., made of rubber, silicone, thermoplastic elastomer, thermoplastic rubber, etc. and of a suitable hardness) sheathed with a helical spring. The spring may flex and elongate / contract whilst limiting transverse expansion / bulging.

Instead of a helical spring, any tensile element that is configured to expand in one direction over another may be used, e.g., a synthetic or polymer fiber that is coiled in a helical structure or a braided structure that emphasizes motion in the longitudinal direction. This advantageously allows the channel to be formed (e.g., molded or extruded) as a single / integral part. It is also an embodiment that the sheathing of the charging cable is formed as a single / integral part, e.g., similar to known cable and hose production methods.

The coolant may be a liquid coolant or a phase change coolant, i.e., a liquid that changes to a vapor when heated and re-liquifies when cooled down, etc. In the following, when referring to a liquid coolant, both variants are included. In one embodiment, the at least one coolant channel comprises a closed or dead end in the connector. In one embodiment, the at least one coolant channel comprises a valve in the connector which opens when the connector is connected to the plug so that the coolant may flow into a respective cooling channel of the plug of the EV. This gives the advantage that the coolant can also be used to cool the plug.

It is an embodiment that the electric charging cable comprises at least one pair of coolant channels positioned on opposite sides of the electric wires, wherein a pressure of the coolant of the coolant channels of the at least one pair is individually controllable. This gives the advantage that the charging cable can be bent in two directions per pair, e.g., by setting a pressure difference in the coolant channels. The larger the pressure difference, the stronger is the bending. If there are multiple pairs of coolant channels, the coolant cable may advantageously be bent in more than one direction. If the pressure in both coolant channels is raised, a higher stiffness of the charging cable may be achieved, Reversely, if the pressure of both coolant channels is lowered, the charging cable may be slacker.

It is an embodiment that the sheathing has a prolate/oblong cross-section with the wires arranged in at least one row aligned with a longer side of the sheathing and wherein the coolant channels are positioned between the longer sides of the sheathing and the electric wires. This advantageously gives a particular high flexibility of the charging cable in at least one direction which, in turn, allows easy bending. This may lead to an additional benefit related to ease of use and convenience by reducing tangling, improved "lay-down", e.g., hanging or drooping in a more regular fashion, and may reduce a trip hazard as it tends to lay flatter on the floor, etc. In a particularly advantageous embodiment, the conduit section of the charging cable may be bent in such a way that it may automatically roll up or be extended from a rolled-up state. Also, the prolate cross-sectional shape of the sheathing facilitates retracting the cable linearly (e.g., pulled, not wound up).

Generally, the charging cable may be retracted or wound up into an enclosure or structure of the charging station. It may be retracted partially or fully, depending on the length of the charging cable and limitations of the retraction mechanism and charging station (e.g., size, shape, configuration, etc.).

A prolate cross-section comprises a cross-sectional form that extends further in one direction than in a direction perpendicular to it. The prolate cross-section may be an oval or ellipse cross-section, a stadium-like cross-section, etc. That the wires arranged are in at least one row aligned with a longer side of the sheathing may comprises that the cross-sections of the wires of a row are arranged in a line along the longer direction / side of the sheathing. In particular, several rows may be aligned in parallel to each other. It is an embodiment that the cross-section of the coolant channels also has a prolate form. This gives the advantage that the exertion of force on the charging cable may be particularly uniform along the longer direction. Generally, however, the arrangement of the coolant channels is not restricted and may, e.g., comprise coolant channels arranged in triangular form or in a circle, oval etc. around the wires. It is also possible to arrange one or more coolant channels between the wires.

The space inside the sheathing between the electric wires and the coolant channels may be filled with filler material to achieve or facilitate force transmission between the coolant channels on the one hand and the sheathing and the electric wires on the other hand. The space inside the sheathing between the electric wires and the coolant channels may also be filled by structural means that support changing the mechanical behavior of the conduit section, e.g., a "spine" (e.g., a spring material to influence the flexibility and dynamics of the conduit section), chains, etc., in particular similar to the design of a soft robotics arm.

It is an embodiment that the electric charging cable, in particular its connector, further comprises at least one sensor for sensing an external force exerted on the electric charging cable. This gives the advantage that the charging cable may be adaptive or responsive to a user interaction with the charging cable, e.g., if the charging is not complete or to prevent other people from interfering with the charger, and the state of the charging station and connectivity to the vehicle. For example, when the charging connector is connected to the plug of EV (and before a charging cycle is initiated), a pressure in the coolant channels may be set to a certain state which allows the cable to take a slack shape (e.g., to slump down to the ground between the EV and charging station). Then (e.g., at a start of the charging cycle), the pressure(s) in the coolant channels can be increased to a specific state to increase stiffness und thus essentially "lock" the shape of the cable. This "locked" state would act to resist or prevent a movement of the cable, e.g., against interference by an unauthorized person such as a user, thief, passerby, neighbor etc. from attempting to interfere with the charging of the EV. Also, a cooling of the charging cable is advantageously achieved. Also, the charging station may retract or excess the charging cable or regulate the length of the charging cable issued to the user / EV vehicle to prevent interference or tripping.

Generally, at least one sensor of the charging cable may be at least one sensor out of the group comprising:
- a pressure sensor, in particular per coolant channel, for sensing a coolant pressure;
- a touch sensor on the connector for sensing a grip of a user on the connector;
- a touch sensor at the conduit section for sensing a grip of a user on the conduit section;
- a gyro sensor, in particular in the connector, for sensing a movement of the charging cable, in particular connector;
- a gravity sensor for sensing a position of the conduit section (e.g., which side of the conduit section is up/down);
- a temperature sensor for sensing a temperature of the coolant;
- a motion sensor for detecting a motion and/or motion direction of the charging cable;
- a bend sensor for detection a bending and/or degree of bending of the charging cable;
- a residual current sensor;
- etc.

The charging cable may also have integrated features that support a general functionality; e.g., a protective sheathing (e.g., to protect against water, mechanical damage, etc.), lighting, features for improved visibility (e.g., reflectors, bright color, etc.), an arrangement of the connector to improve grip, strain relief, etc., coatings (e.g., anti-bacterial, dirt repellant, etc.) etc. For example, at least one light may be provided on the connector to aid plugging in at night and communicating charging status. Also, a light strip (e.g., LEDs, fiber optics, etc.) may be placed along the length (continuously or at set distances) of the charging cable to provide ambient illumination and/or to increase visibility of the cable to the user and people in the vicinity (e.g., to aid the charging operation, provide a warning of a trip hazard to people passing by, etc.).

Additionally, the charging cable may include a residual current sensor and/or circuit break (e.g., RCD, GFCI) system which may be used to disables or stops energizing the electric wires if the integrity of the charging cable / sheathing is breached (e.g., if there is an imbalance between the electric wires).

Furthermore, haptic feedback can be provided by the charging cable, e.g., through one or more discrete haptic actuators, in particular of the connector, or by pulsing the pressure of the coolant.

The object is also achieved by a charging station, EVSE, for electric vehicles, comprising an electric charging cable as described above and further comprising at least one coolant pressure device connected to the at least one coolant channel of the electric charging cable, the coolant pressure device being adapted to set a pressure of a coolant inside the at least one coolant channel connected to it. If the charging cable comprises more than one coolant channel, the coolant channels may be pressurized independently/individually. The charging station achieves the same advantages as the charging cable and can be embodied accordingly.

The charging station may be a commercial/public charging station or a residential charging station.

That the coolant pressure device is adapted to set a pressure to a respective coolant channel may include evacuating the coolant channel.

It is an embodiment that the charging station comprises and/or is adapted to communicate with at least one sensor.

It is an embodiment that the charging station comprises and/or is adapted to communicate with at least one sensor to control, via the coolant pressure device, a coolant pressure of the coolant of the at least one coolant channel. In other words, the charging station may be adapted to the pressure level(s) of the coolant pressure(s) based on a measurement or reading of at least one sensor. This gives the advantage that the mechanical behavior of the charging cable can be specifically adapted to a present use case. In particular, the mechanical behavior of the charging cable may be adapted to a user interaction with the plug and/or the conduit section (e.g., the cable may respond to assist the user or, opposingly, resist the user, e.g., if the charging is not complete yet, or to prevent other people from interfering with the charger) and/or the state of the charging station and/or a connectivity to the vehicle.

In an embodiment, the at least one sensor comprises a pressure sensor located at the coolant pressure device and/or in a respective coolant channel of the charging cable. This gives the advantage that a pressure of the coolant can be precisely set. Another advantage is that measured pressure changes in the coolant channels may be used to detect external forces exerted on the charging cable, e.g., by a user, e.g., via the connector. This, in turn, enables reacting to a user handling of the charging cable, in particular its connector, e.g., by supporting a movement of the charging cable in a direction effected by the external force. If, for example, it is sensed by measuring and interpreting pressure changes in the coolant channels that the charging cable is lifted up, the charging station may set the pressure of the coolant such that a bending of the charging cable is achieved that also lifts the charging cable up. Generally, the detection of external forces exerted on the charging cable by measuring pressure changes in the coolant channels may be used as a feedback loop to detect handling, interference, collisions, errors, plug insertion/engagement forces, etc. This may be particularly useful if the charging cable is used as a robotic charging cable / in analogy to a robotic charging arm. Also, monitoring the pressure in the coolant channels may be used to detect leaks and/or accidental situations like when a neighboring car is parked with a tire on the charging cable, etc. Furthermore, monitoring the coolant pressure can be used to monitor safety aspects of the charging cable, e.g., whether a coolant channel and an electric wire may come close.

It is an embodiment that the charging station comprises and/or is adapted to communicate with at least one sensor to monitor a location of the charging cable and/or the charging connector relative to the EV and/or the charging station.

One, some, or all sensors located in the charging cable may be communicatively connected to the charging station to enhance a reaction of the charging station to certain use cases and/or environmental factors such as low visibility, the presence of persons near the charging cable, etc. This reaction may comprise altering a coolant pressure, activating lights, giving out acoustic signals, generating haptic pulses, etc. For example, acoustic signals may be provided to users or people passing by to communicate a charging state and to alert them to the presence of the charging cable.

In an embodiment, the charging station comprises and/or is adapted to communicate with an area surveillance system comprising at least one sensor, the area surveillance system being adapted to identify a movement of persons in the vicinity of the charging station, and wherein the charging station is adapted to set a coolant pressure based on a user's use (e.g., manual maneuvering) of the charging cable identified by the area surveillance system. The area surveillance system may, e.g., comprise one or more cameras for camera vision, proximity sensors, etc. The recognition of the user's use may be supported by internal sensors (e.g., pressure sensors for the coolant, touch sensors in the charging cabler cable and/or charging station, etc. The user's use may be recognized by identifying an actual handling of the charging cable by the user and/or by identifying an intended (future) handling of the charging cable based on the movement(s) of the user.

Furthermore, the charging station may be adapted to communicate a status of charging (e.g., charging in progress, charging ended, abortion of charging, etc.) via the charging cable, in particular its connector, or directly to a smart phone/device of the user, e.g., via an app running on the device.

In an embodiment, the charging station is adapted to set a pressure of the coolant inside the at least one coolant channel of the charging cable to bring the charging cable into a stowed position or a charging position, respectively. This enhances a user experience since these movements of the charging cable are the most strenuous. Bringing the charging cable into the stowed position may be particularly useful after charging when the charging cable is returned to the charging station. To bring the charging cable into the charging position, the charging cable is typically stretched to connect to the vehicle, e.g., when a user takes the charging plug from the station and moves it to the vehicle and then connects it to the vehicle's plug.

In an embodiment, the charging cable may be rolled up into the stowed position and rolled out into the charging position by adjusting the pressure of the coolant. This is particularly easy to achieve if a charging cable with a prolate/oblong cross-section with a pair of coolant channels positioned on opposite sides of the electric wires as described above is used. In this case, for rolling up the cable, the pressure difference just needs to be large enough so that the charging cable rolls up itself or at least significantly supports a rolling-up handling by the user. Reversely, for stretching the charging cable out of its rolled-up state, the pressure difference may, e.g., be equalized on a high enough pressure level. This may be in combination with a linear or rotational mechanical device to retract or deploy the charging cable.

It is an embodiment that the charging station is adapted to control the charging cable to function as a robotic arm, in particular "soft robotic" arm. This enables a particularly wide variety of the mechanical behavior and/or use cases. The charging cable is accordingly designed as a soft robotic arm with the coolant channels acting as pressure lines determining the mechanical behavior of the charging cable.

It is an embodiment that the charging cable additionally comprises at least one pressure line for controlling the mechanical behavior of the charging cable that does not or does not significantly function as a cooling channel. Such pressure lines can advantageously be pressurized without regard for cooling needs. This, in turn, may advantageously allow a wider range of mechanical behavior of the charging cable. Also, the fluid inside the at least one pressure line may advantageously be chosen without regard for cooling needs. Additionally, or alternatively, to the use of at least one pressure line, the charging cable may comprise at least one (non-fluid) mechanical actuation means, particularly, at least one tendon/string-tension means, e.g., including a string cable, that is provided to control the mechanical behavior of the charging cable.

It is an embodiment that the charging station comprises and/or is adapted to communicate with an AI (artificial intelligence) / ML (machine learning) system to set the coolant pressure. This gives the advantage that the mechanical behavior of the charging cable can be improved to aid the user's use, in particular handling, of the charging cable. In particular, use of the AI system may enable fully automated mechanical behavior, in particular movement, of the charging cable, e.g., in the manner of a "soft robot".

The use cases may generally include one or more of the following examples:
Curling: the coolant is evacuated from the conduit(s) on one side of the conduit section of the charging cable and pressurized on the opposite side to create a self-curling effect. Thus, the charging cable can curl up or contract.

Lifting the cable: applying pressure on the coolant in such a way that, when the connector is connected to an EV's plug, it has a contracting or bending/curling effect on the cable which results in the charging cable being lifted off the ground. This may provide the benefit of preventing a trip hazard (e.g., if the cable is retracted and lifted to waist height).

Perception of weight reduction: pressurizing the coolant on the bottom (vertically lowest) side of the conduit section and reducing the pressure on the upper side of the conduit section cable may reduce the perceived weight of the charging cable by the user.

Controlling the pressure at opposing sides of the cable can control the shape of the cable either in a stowed position (when not charging, charging cable and plug are returned to the charging station) or charging position (when connected to the vehicle) or a movement between these positions (e.g., when a user takes the charging connector from the charging station and moves it to the EV and then makes the connection with the EV'S plug.

Coordinating the coolant pressure in the charging cable with use states of the charging station/cable is generally beneficial. For example, when the charging station/cable is not in use (e.g., the connector is docked/locked at the charging station), when the user lifts the plug from the charging station, when the user maneuvers the plug and cable to the vehicle, and when the user connects the plug into the vehicle receptacle, and when the charging cycle is activated by the user or automatically on connection.

Generally, the charging cable may be controlled for fully automated setting of its mechanical behavior, e.g., shape and/or movement, and/or may be controlled to power-assist a user.

The above described features and advantages of the invention as well as their kind of implementation will now be schematically described in more detail by at least one embodiment in the context of one or more figures.
- Fig.1: shows a rough sketch of an oblique view of a charging cable;
- Fig.2: shows a sketch of a cross-sectional view of the charging cable of Fig.1 according to a first embodiment;
- Fig.3: shows a sketch of a cross-sectional view of the charging cable of Fig.1 according to a second embodiment;
- Fig.4: shows a sketch of an oblique view of a section of the charging cable of Fig.1 with two different shapes; and
- Fig.5: shows a sketch of a charging station charging an electric vehicle.

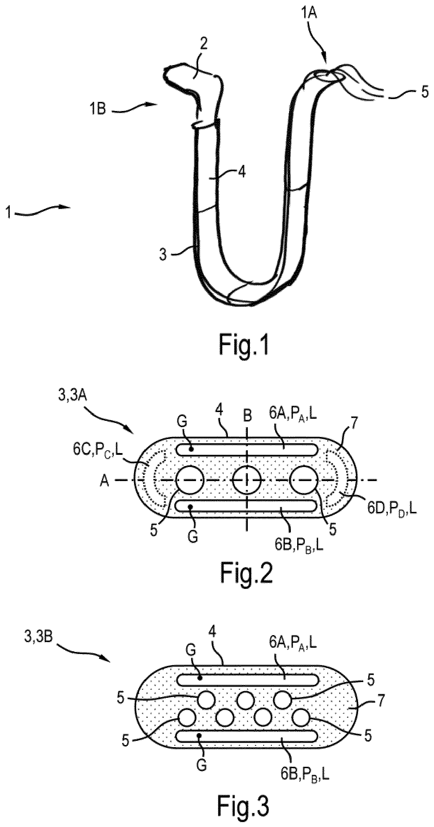

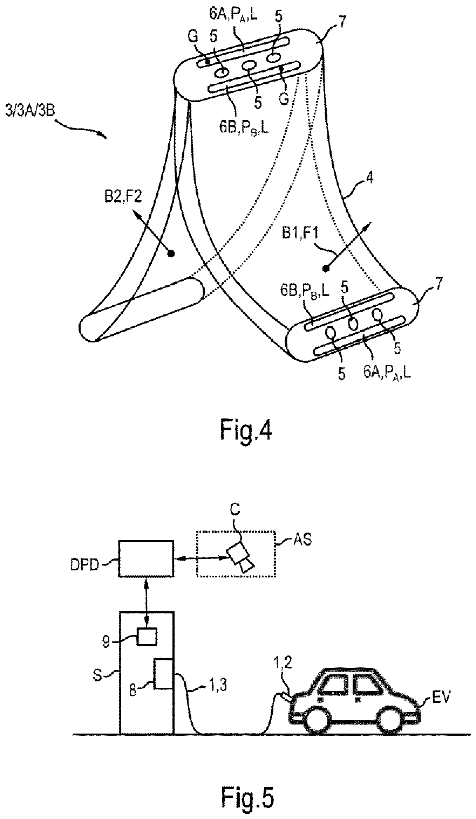

**Fig.1** shows a rough sketch of an oblique view of a charging cable 1 for charging electric vehicles EV, see Fig.5. On one end 1A, the charging cable 1 may be fixedly connected to a charging station S, see Fig.5. On the other end 1B, a charging connector 2 is present to connect the charging cable 1 to a fitting plug of an electric vehicles EV. For connection between the charging station S and the plug 2, a conduit section 3 is used. The conduit section 3 comprises a flexible sheathing 4 and inside the sheathing several flexible electric wires 5 running along the sheathing 4, i.e., from end 1A to the connector 2. At least some of the electric wires 5 are used for carrying a charging current. In an embodiment, at least one of the wires 5 is adapted for data communication, e.g., control, between the charging station S and the electric vehicle EV. In an embodiment, at least one wire 5 is adapted for carrying a charging current as well as for data communication, e.g., by power line communication, PLC. The conduit section 3 also comprises at least one flexible coolant channel running along the sheathing 4, i.e., from end 1A to the connector 2, which will be described in more detail further below.

The conduit section 3 has a prolate cross-section and thus a flattened form such that is bends easily around an axis parallel to the longer cross-sectional side of the conduit section 3, as shown in Fig.1. Another advantage of the flattened form of the conduit section 3 is that it lies relatively flat on the ground and is thus less likely to cause tripping than, e.g., a conduit section with a circular cross-section.

**Fig.2** shows a sketch of a cross-sectional view of the conduit section 3 of the charging cable 1 of Fig.1 according to a first embodiment 3A. The cross-section is prolate with a stadium-like shape having a longer axis or side A and a shorter axis or side B. The wires 5 are arranged such that their cross-sections lie in one linear row aligned with the longer axis A, here: three wires 5 with their cross-sections arranged linearly on or parallel to the longer axis A. The wires 5 are positioned on (or as close to) to the neutral axis/plane of the charging cable 1, as represented by axis A.

A first pair of coolant channels 6A, 6B is positioned on opposite sides of the electric wires 5 along the shorter axis B, i.e., if viewed along the shorter axis B with the electric wires 5 positioned between the coolant channels 6A, 6B. This is equivalent to the fact that the coolant channels 6A and 6B are positioned between the sheathing 4 and the electric wires 5.

A pressure P_{A} and P_{B} of a coolant L residing in the coolant channels 6A and 6B, respectively, is individually controllable. This includes that the pressure P_{A} of the coolant L in the coolant channel 6A can be set to a different level than the pressure P_{B} of a coolant L in the coolant channel 6B. This may also be expressed such that a pressure difference ΔP between the pressures P_{A}, P_{B} of the coolant channels 6A, 6B can be set. To enable a particularly precise setting of the pressures P_{A}, P_{B} of the coolant L within the coolant channels 6A, 6B, a respective pressure sensor G may be provided.

By way of example only, the coolant channels 6A, 6B have an oblong cross-sectional form, wherein their longer direction or axis lays parallel to the longer axis A of the sheathing 4.

In an embodiment, the space inside the sheathing 4 between the electric wires 5 and the coolant channels 6A, 6B may be filled with filler material 7 to achieve or facilitate force transmission between the coolant channels 6A, 6B on the one hand and the sheathing 4 and the electric wires 5 on the other hand. Alternatively, or additionally, structural means (not shown) may be present inside the conduit section.

Alternatively, or additionally to the first pair of the coolant channels 6A, 6B, the conduit section 3 may comprise a second pair of the coolant channels 6C, 6D positioned on opposite sides of the electric wires 5 along the longer axis A, i.e., if viewed along the longer axis A with the electric wires 5 positioned between the coolant channels 6C, 6D. This is equivalent to the fact that the coolant channels 6A and 6B are positioned between the sheathing 4 and the electric wires 5. A pressure P_{C} and P_{D} of a coolant residing in the coolant channels 6C and 6D, respectively, is also individually controllable. By way of example only, the coolant channels 6C, 6D have an oblong, curved cross-sectional form conforming to the form of the shorter side of the sheathing 4 but are not restricted to it. For example, they may have a circular or oval cross-section.

**Fig.3** shows a sketch of a cross-sectional view of the conduit section 3 of the charging cable 1 of Fig.1 according to a second embodiment 3B. The conduit section 3B has the same basic design as conduit section 3A but two linear rows of stalked electric wires 5.

**Fig.4** shows a sketch of an oblique view of the conduit section 3 of the charging cable 1 of any of Fig.1 to Fig.3 with two different bending directions B1 and B2. The bending directions can be specifically set by setting the pressure levels P_{A} and P_{B} to different values and the pressure difference ΔP to a value unequal to zero, respectively.

Particularly, if P_{A} > P_{B}, a force F1 is exerted on the sheathing 4 and the wires 5 bending the conduit section 3 in bending direction B1. Reversely, if P_{A} < P_{B}, a force F2 is exerted on the sheathing 4 and the wires 5 bending the conduit section 3 in bending direction B2. The larger the pressure difference ΔP, the stronger the bending.

The pressure level in both conduit section 3A can also determine further mechanical behavior like a stiffness of the conduit section 3: The larger the smaller of the pressure levels P_{A} and P_{B} is, the stiffer is the conduit section 3A. Thus, by raising both pressure levels P_{A} and P_{B}, the conduit section 3 can be controlled to be stiffer, and by lowering both pressure levels P_{A} and P_{B}, the conduit section 3 can be controlled to be slacker.

It is also possible to vary the pressure levels P_{A} and P_{B} in a pulsed manner to provide haptic feedback to a user, e.g., in the case of finished charging, signaling an error, etc.

If the coolant channels 6C, 6D are present, they can be pressurized in a manner analogous to coolant channels 6A, 6B. This allows, inter alia, a sideways bending of the conduit section 3.

Generally, charging cable 1, i.e., the connector 2 and/or the conduit section 3, may comprise at least one sensor. This at least one sensor may, e.g., be a touch sensor for sensing an external force exerted on the electric charging cable 1, e.g., by a user, the pressure sensors G for sensing coolant pressures P_{A}, P_{B} and/or Pc, P_{D}, etc.

**Fig.5** shows a sketch of a charging station S charging an electric vehicle EV via the charging cable 1. The charging station S comprises at least one coolant pressure device 8 connected to the at least one coolant channel 6A, 6B and/or 6C, 6D of the electric charging cable 1. The at least one coolant pressure device 8 is controllable by a control device 9 of the charging station S to individually set the levels of the coolant pressures P_{A}, P_{B} and/or P_{C}, P_{D}. The control device 9 may be connectively coupled to one or more sensors of the electric vehicle EV, the charging cable 1, the charging station S itself and/or a surrounding of the charging station S, and is adapted to set the levels of the coolant pressures P_{A}, P_{B} and/or P_{C}, P_{D} based on measurements from the sensor(s).

In particular, the charging station S comprises and/or is adapted to communicate with an area surveillance system AS comprising at least one sensor (e.g., as shown, at least one camera C), the area surveillance system AS being adapted to identify a movement of persons in the vicinity of the charging station S. This may be achieved, e.g., by using object recognition, pattern recognition, machine vision, artificial intelligence, in particular, machine learning, etc. To this effect, the area surveillance system AS may be connected to or be equipped with a data processing device DPD, e.g., a computer, which is adapted, e.g., programmed, to analyze a movement of persons within the at least one camera's C field of view and to recognize a kind of handling/use of the charging cable 1 and/or to predict a probable future kind of handling/intention of handling the charging cable 1. This information may be passed on to the charging station S. The charging station S may then set the levels of the coolant pressures P_{A}, P_{B} and/or P_{C}, P_{D} such that the handling of the charging cable 1 is either supported or automatically performed. For example, if a posture and movement of a person indicates that this person wishes to lift up the connector 2 (which may be supported, e.g., by readings of further sensors, e.g., on the connector 2 and/or in the conduit section 3), the coolant pressures P_{A} and P_{B} may be set such that the conduit section 3 bends upwards.

In another use case, the area surveillance system AS and/or further sensors, e.g., on the connector 2 and/or in the conduit section 3, recognize(s) that a person wishes to bring the charging cable 1 into a stowed position or a charging position, respectively. The charging station S may then set the coolant pressures P_{A} and P_{B} such that the conduit section 3 is rolled up or extended, respectively.

Of course, the invention is not restricted to the described embodiments.

### List of Reference Signs

- 1: Charging cable
- 1A: Charging station-side end
- 1B: Connector-side end
- 2: Charging connector
- 3: Conduit section
- 3A: Conduit section
- 3B: Conduit section
- 4: Sheathing
- 5: Electric wire
- 6A-6D: Coolant channel
- 7: Filler
- 8: Coolant pressure device
- 9: Control device
- A: Longer axis
- AS: Area surveillance system
- B: Shorter axis
- B1: Bending direction
- B2: Bending direction
- C: Cameras
- DPD: Data processing device
- EV: Electric vehicle
- F1: Force
- F2: Force
- G: Pressure sensor
- L: Coolant
- P_{A}-P_{D}: Pressure
- S: Charging station

## Claims

1. An electric charging cable (1), comprising a flexible sheathing (4) and inside the sheathing (4) several flexible electric wires (5) running along the sheathing (4) and at least one flexible coolant channel (6A-6D) running along the sheathing (4), the electric wires (5) and the at least one coolant channel (6A-6D) ending in a charging connector (2), wherein a pressure (P_{A}-P_{D}) of a coolant (L) inside the at least one coolant channel (6A-6D) is individually controllable to set a mechanical behavior of the charging cable (1).

2. The electric charging cable (1) according to claim 1, comprising at least one pair of coolant channels (6A-6D) positioned on opposite sides of the electric wires (5), wherein a pressure (P_{A}-P_{D}) of the coolant (L) of the coolant channels (6A-6D) of the at least one pair is individually controllable.

3. The electric charging cable (1) according to claim 2, wherein the sheathing (4) has a prolate cross-section with the wires (5) arranged in at least one row aligned with a longer side (A) of the sheathing (4) and wherein the coolant channels (6A-6D) are positioned between the longer sides (A) of the sheathing (4) and the electric wires (5).

4. The electric charging cable (1) according to any of the preceding claims, further comprising at least one sensor (G) for sensing an external force exerted on the electric charging cable (1).

5. A charging station (S) for electric vehicles, comprising an electric charging cable (1) according to any of the preceding claims and further comprising at least one coolant pressure device (8) connected to the at least one coolant channel (6A-6D) of the electric charging cable (1), the coolant pressure device (8) being adapted to set the pressure (P_{A}-P_{D}) of the coolant (L) inside the at least one coolant channel (6A-6D) connected to it.

6. The charging station (S) according to claim 5, wherein the charging station (S) comprises and/or is adapted to communicate with at least one sensor (G, C) to control, via the coolant pressure device (8), a pressure (P_{A}-P_{D}) of the coolant (L) of the at least one coolant channel (6A-6D).

7. The charging station (S) according to any of the claims 5 to 6, wherein the charging station (S) comprises and/or is adapted to communicate with an area surveillance system (AS) comprising at least one sensor (C), the area surveillance system (AS) being adapted to identify a movement of persons in the vicinity of the charging station (S), and wherein the charging station (S) is adapted to set the coolant pressure (P_{A}-P_{D}) based on a user's use of the charging cable (1) identified by the area surveillance system (AS, DPD).

8. The charging station (S) according to any of the claims 5 to 7, wherein the charging station (S) is adapted to set the pressure (P_{A}-P_{D}) of the coolant (L) to bring the charging cable (1) into a stowed position and a charging position, respectively.

9. The charging station (S) according to claim 8, wherein the charging cable (1) may be rolled up into the stowed position and rolled out into the charging position, respectively, by adjusting the pressure (P_{A}-P_{D}) of the coolant (L).

10. The charging station (S) according to any of the claims 5 to 9, wherein the charging station (S) comprises and/or is adapted to communicate with an AI system (DPD) to set the coolant pressure (P_{A}-P_{D}).

11. The charging station (S) according to any of the claims 5 to 10, wherein the charging station (S) is adapted to control the charging cable (1) to function as a robotic arm.
